Europäisches Patentamt

European Patent Office

Office européen des brevets

(11) Publication number: **0 094 596**
**B1**

(12) **EUROPEAN PATENT SPECIFICATION**

(45) Date of publication of patent specification: 28.12.88

(51) Int. Cl.⁴: **G 01 K 7/02, G 01 K 15/00**

(21) Application number: 83104590.1

(22) Date of filing: 10.05.83

(54) Calibrated probe for temperature measuring.

(30) Priority: 19.05.82 US 379857

(43) Date of publication of application:
23.11.83 Bulletin 83/47

(45) Publication of the grant of the patent:
28.12.88 Bulletin 88/52

(84) Designated Contracting States:
BE CH DE FR GB IT LI LU NL

(56) References cited:
DE-A-2 217 964
FR-A-2 044 179
FR-A-2 305 720
US-A-3 321 974
US-A-3 834 237
US-A-3 853 000
US-A-4 120 201

JOURNAL OF PHYSICS SCIENTIFIC-
INSTRUMENTS, vol. 4, no. 7, July 1971,
LONDON, (GB). Pages 535-537. KALLIOMAKI et
al.: "Measurement of surface temperature with
a thermally compensated probe".

(73) Proprietor: Cooper Industries Inc.
P.O. Box 4446
Houston Texas 77210 (US)

(72) Inventor: Wilhelmson, Jack Lee
105 Mary Lane
Cheraw South Carolina (US)
Inventor: Postlewait, Lester Buck
7 Chatham Trace
Cheraw South Carolina (US)

(74) Representative: Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)

(56) References cited:

ELECTRICAL DESIGN NEWS, vol. 8, nr. 3,
March 1963, DENVER, (US). Pages 48, 49
"Nickel Resistor Compensates".

Courier Press, Leamington Spa, England.

## Description

This invention relates to the field of hand-held probes for measuring the temperature of objects with which such probes are brought into contact.

The assembly of delicate components and fine wiring used in modern miniaturized electronics requires soldering equipment which can operate within precise, narrow temperature limits. The need to verify that such equipment complies with its desired operational temperature ranges has spurred a search for temperature measuring devices which have an accuracy of ± 1°C in the range of 40°C to 500°C. In hand-held probes, however, which normally use thermocouples for temperature measurement, several problems arise.

First, structural characteristics and inherent metallurgical impurities afflict any given thermocouple with a built-in measurement error margin which is a relatively constant quantity irrespective of changes in either the ambient or the measured temperatures. Thus the basic accuracy of a thermocouple between 100°C and 500°C is no better than ± 11°C. This problem has been met to some extent by careful manufacture and selection of the wires that make up each thermocouple and by the use of calibration circuits which can be set to compensate electrically for the error margin built into the thermocouple with which the calibration circuit is operated.

In addition, however, the metals used in thermocouples are usually different from those used in the electronic circuitry of the instrumentation which processes the thermocouple temperature readings. For example, a common thermocouple, the Type J thermocouple, is made up of a junction between an iron and a constantan lead, while electronic circuits commonly have conductors made of copper. This means that where the ouput leads of the thermocouple are connected to an electronic circuit, a bimetallic junction will result. Such a junction itself tends to function in the manner of a thermocouple, adding or subtracting to the instrumentation system voltages which vary in amount as the temperature at those junctions changes.

This second source of thermocouple error is commonly dealt with in one of two ways. The output connections can be held at a constant temperature, as in an ice bath or in an oven of known temperature, converting the connections into reference junctions which produce an invariant thermoelectric effect that can be counteracted by additional circuitry. An ice bath or a constant temperature oven is too bulky to permit locating the reference junctions in the hand-held portion of a thermocouple probe. Yet the metals of which thermocouple output leads are commonly composed are too brittle to permit the leads to be extended long distances from the thermocouples before junctioning with the copper of an electronic circuit, as for example to the stationary console unit from which such probes are operated and in which units sufficient space does exist to place an ice bath or constant temperature oven.

In the alternative, yet another calibration element, one having a compensating electrical effect which varies with the temperature of the output junctions, is added to the circuitry. Careful design and selection of such a calibration element ideally permit its temperature dependent electrical effects to offset the variable errors in thermocouple readings caused in the output junctions by ambient temperature changes.

Measuring instruments which use thermocouples in hand-held probes generally require that the probes be interchangeable so that the combination of a new probe with the same instrumentation console need not be recalibrated when an old probe is replaced. This requirement further complicates calibration solutions to thermocouple errors, both those errors built in and those arising from the unwanted effects of output junctions. The problems in this regard are so numerous that only prohibitively expensive instruments using selected probes can meet the normal accuracy requirement range of ± 1°C over a normal range of ambient temperatures and a range of 100°C to 500°C in measured temperatures.

A third difficulty encountered with the accuracy of handheld thermocouple probes is that in measuring small items having high temperatures, the probe itself serves as a heat sink, drawing heat into itself and out of the measured item. This probe-loading effect reduces the temperature of the measured item in the vicinity of the probe, resulting in a correspondingly inaccurate lower than actual temperature reading. A partial solution to this difficulty is found in making probe tips very fine, but such delicate equipment does not withstand everyday or repeated use.

A calibrated probe, in accordance with the generic clause of claim 1, is known from the US-A-3 321 974 document. The probe disclosed in said document comprises a thermocouple to measure the temperature of an object. An electronic circuitry for amplifying and displaying the temperature reading at said thermocouple is also provided.

Further in said document, the temperature sensing thermocouple, contactable with the surface which temperature is to be measured, is heated so as to eliminate heat flow from the surface to the probe. A second thermocouple senses the temperature of the first thermocouple which contacts the surface and a heater heats the second thermocouple to the temperature of the first thermocouple. The heater is operated in response to any difference in temperatures sensed by these two thermocouples.

From Journal of Physics, E, Scientific Instruments, Volume 4 No. 7, pages 535 to 537, a temperature probe is known which also uses a heated thermocouple to minimize the thermal loading of the probe.

It is the object of the present invention to produce a hand-held probe that measures temperatures from 40°C to 500°C with an accuracy of ± 1°C and which can be easily calibrated.

This task is solved by the features of claim 1.

Preferred embodiments are disclosed in the depending claims.

The invention will be described with additional specificity and detail through the use of the accompanying drawings in which:

Figure 1 is an exterior elevation view of the hand-held portion of a temperature probe incorporating the teachings of the present invention;

Figure 2 is a longitudinal sectional view of the hand-held portion of the temperature probe shown in Figure 1;

Figure 3 is an enlarged cross section of the tip portion of the hand-held probe of Figure 1;

Figure 4 is a transverse cross section of the hand-held probe shown in Figure 2 taken along the section line 4-4 of Figure 2; and

Figure 5 is a simplified electrical schematic diagram of a hand-held temperature probe incorporating the teachings of the present invention along with its associated instrumentation circuitry.

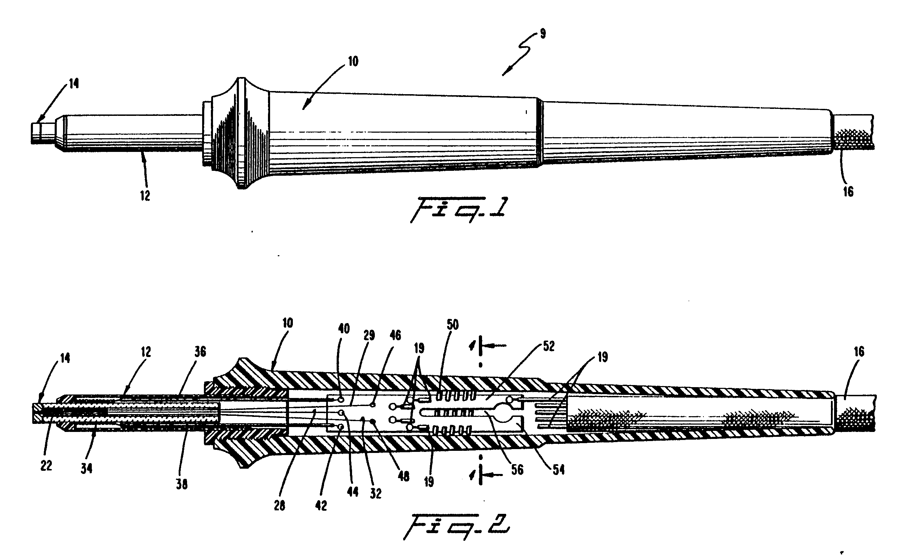

Referring to Figure 1, the exterior of a hand-held temperature probe 9 for measuring the temperature of an object is shown comprising a handle portion 10 and an elongated shaft portion 12 terminating in a metal tip 14 which actually contacts the object the temperature of which is to be measured. The probe is electrically connected by a cable 16 to a console (not shown) containing the electronics which amplify and drive probe 9 and display its temperature readings.

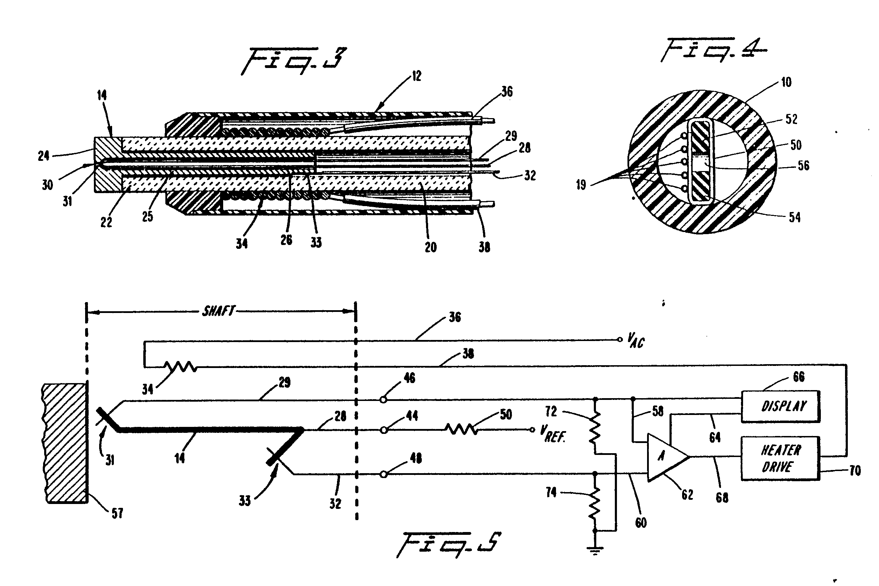

The cross section of probe 9 shown in Figure 2 discloses that within handle portion 10 is a printed wiring board 18 to which are connected numerous wires 19 leading to cable 16. Disposed within elongated shaft portion 12 is a ceramic tube 20 housing in one end 22 thereof metal tip 14. As more advantageously shown in Figure 3, on a portion of metal tip 14 which extends beyond end 22 of ceramic tube 20 is a first location 24 at which the temperature probe contacts the object the temperature of which is to be measured. Furthermore, metal tip 14 has a shank 25 extending inside ceramic tube 20. On shank 25 is a second location 26 at a predetermined distance from first location 24.

The predetermined distance between first location 24 and second location 26 can vary depending on the conditions under which the probe is to be used. For the temperature measurement range contemplated, the distance between first location 24 and second location 26 must first be large enough to permit a temperature gradient to arise between first location 24 and second location 26 when temperature measurement is in progress. On the other hand, the predetermined distance must be small enough to permit such a degree of thermal coupling between second location 26 and first location 24 that the addition of heat to metal tip 14 in the vicinity of second location 26 will reduce in a prompt fashion the rate of heat flow out of the item being measured and into metal tip 14 at first location 24. It has been found that for purposes of the present invention a predetermined distance of about 0.5 to 1.0 inches is preferable.

In accordance with one aspect of the present invention, means are provided for preventing heat flow in metal tip 14 from first location to second location 26 when temperature measurements are being taken with probe 9. As embodied herein the means for preventing heat flow includes a first means for measuring the temperature at location 24, a second means for measuring the temperature at location 26, and heater means for maintaining location 26 at substantially the same temperature as location 24.

The first means for measuring the temperature at location 24 includes a second lead 28 composed of a first metal identical to that of tip 14 and a first lead 29 composed of a second metal different from that of metal tip 14 both crimped within a small hole 30 in metal tip 14 at first location 24. First lead 29 and metal tip 14 form a first thermocouple junction 31 which is exposed at first location 24 to contact with any object the temperature of which is being measured and is used to sense the actual temperature of that object. It should be noted that although second lead 28 is depicted for purposes of illustration in Figures 2 and 3 as joined to metal tip 14 at the same point as is first lead 29, second lead 28, which is composed of the same metal as metal tip 14, could be connected anywhere on metal tip 14 without impairing the operation of probe 9.

The second means for measuring the temperature at location 26 includes a third lead 32 composed of a metal like that of lead 29. Lead 32 is welded at second location 26 on shank 25 of metal tip 14 to create a second thermocouple junction 33 which senses the temperature of metal tip 14 at second location 26. Heat flow from first location 24 toward second location 26 can be detected from the difference in temperatures at first location 24 and second location 26. If the difference is positive, heat is flowing away from location 24 and the object being measured, and tip 14 is "loading" heat from the item being measured.

In practice the heater means for maintaining location 26 at substantially the same temperature as location 24 includes a heating element 34 wound around the outside of ceramic tube 20 and having leads 36, 38. At least a portion of heating element 34 lies intermediate second location 26 on metal tip 14 and end 22 of ceramic tube 20. Heating element 34 is controlled by electronic circuitry which uses the difference in potential between thermocouples 31, 33 as a driving signal for activating heater element 34. Therefore, by electronic feedback the heat flow in metal tip 14 from first location 24 to second location 26 is forced to be very close to zero at all times. This eliminates the heat "loading" effect of probe 9 on the temperature of the item being measured.

Reduction of the heat "loading" effect to close to zero permits the construction of a probe having a more substantial and rugged tip, because elimination of heat "loading", is achieved not through the fineness of the probe tip, but through the feedback circuitry and differential temperature sensing capacity provided by thermocouple 31 at first location 24 and thermocouple 33 at second location 26 a predetermined distance away. Therefore the tip 14 of temperature probe 9 can be constructed rugged enough to withstand everyday repeated usage.

Although metal tip 14 and thermocouple leads 28, 29, 32 can be made of a number of metals, tip 14 is advantageously composed of iron with lead 28 being made of that same metal. Leads 29, 32 are preferably constantan; so that thermocouple junctions 31, 32 being iron/constantan junctions are Type J thermocouples. As can best be seen in Figure 2, constantan leads 29, 32 respectively join the copper circuitry of probe 9 at contacts 46, 48 located on printed wiring board 18. These junctions between constantan and copper respectively constitute unwanted first and second reference junctions which contribute temperature variable thermoelectric effects to the probe electronics. Iron lead 28 forms a similarly unwanted output junction at its union with contact 44 on printed wiring board 18. Heater leads 36, 38 are joined respectively to printed wiring board 18 at contacts 40, 42 which do not constitute such unwanted junctions.

The probe uses a calibrating means to compensate for errors in the temperature measurements of the first and second thermocouples. The calibrating means includes a resistance temperature detector 50 in close proximity to both first output junction 46 and second output junction 48 and connected in series with iron lead 28. Resistance temperature detector 50 comprises a wire and means for reducing the diameter of the wire by stretching. Referring to Figures 2 and 4 together, printed wiring board 18 has a pair of generally parallel legs 52, 54 with a space 56 therebetween. The means for reducing the diameter of the wire of resistance temperature detector 50 by stretching includes a winding of the wire of resistance temperature detector 50 about legs 52, 54 in such a manner that when space 56 between legs 52 and 54 is widened, the wire is stretched longitudinally reducing its diameter.

The temperature coefficient of resistance temperature detector 50 is selected such that its proximity to output junctions 44, 46, 48 permits resistance temperature detector 50 to compensate for the effects of ambient handle temperature changes on junctions 44, 46, 48. In practice the bulk resistance of resistant temperature detector 50 is calculated to compensate for impurities and the bulk resistance of thermocouples 31, 33, thereby to overcome the ± 11°C error present in most thermocouple measuring devices. In the assembly of the probe, each resistance temperature detector 50 is finely adjusted by the technique of thermally coupling the newly assembled probe with a standard temperature probe and using an appropriate tool to widen space 56, stretching the wire of resistance temperature detector 50, reducing its diameter and changing its bulk resistance without altering its temperature coefficient. When the temperature difference between the new probe and the standard probe is zero, resistance temperature detector 50 and thermocouples 31, 33 are permanently calibrated to each other.

The operation of temperature probe 9 is further illuminated by reference to the schematic diagram contained in Figure 5, in which thermocouple 31 is shown contacting object 57 to measure the temperature thereof. Thermocouple 33 senses heat flow in metal tip 14. Resistance temperature detector 50 is connected in series between a reference voltage $V_{ref}$ and one end of iron lead 28 which is electrically common to both thermocouples 31, 33. The temperatures sensed by thermocouples 31, 33 are conveyed respectively by way of constantan leads 29, 32 and output junctions 46, 48 to first and second inputs 58, 60 of amplifier 62. Output 64 of amplifier 62 drives a display unit 66 which shows the temperature measured by thermocouple 31, while output 68 of amplifier 62 stimulates heater drive 70 to turn on heating element 34 when the temperature sensed by thermocouple 31 is greater than that sensed by thermocouple 33. Heater 34 is connected in series between heater drive 70 and a voltage source $V_{ac}$ by leads 38, 36, respectively. Output junctions 46, 48 are grounded respectively through first and second completion resistors 72, 74 which afford a path for the current which passes through resistance temperature detector 50.

It should be noted that it is the fact that resistance temperature detector 50 is in effect in series with each of thermocouples 31, 33 that permits more than one thermocouple to be calibrated by using just one resistance temperature detector. The two constantan leads 30, 32 used in any individual probe are always made of the same piece of thermocouple wire and therefore match very well in both bulk resistance and temperature coefficient. For these reasons, a single resistance temperature detector, such as resistance temperature detector 50, can correctly compensate for two thermocouples at once. This makes calibration of the device a relatively simple and inexpensive procedure when compared with those used previously.

It will be apparent to those skilled in the art that modifications and variations can be made in the apparatus of this invention. The invention in its broader aspects is, therefore, not limited to the specific details, representative methods and apparatus and illustrative examples shown and described. Accordingly, alterations may be made from such details without departing from the invention as claimed by the claims

## Claims

1. A calibrated probe for measuring the temperature of an object with which said probe is contacted, comprising:

(a) a thermocouple (31) in contact with said object for measuring the temperature of said object and having first and second leads (29, 28),

(b) electronic circuitry (62, 66) for amplifying and displaying the temperature reading at said thermocouple, said circuitry being connected to said first lead (29) of said thermocouple to define a first output junction (46) thereat, characterized by

(c) a resistance temperature detector (50) in close proximity to said output junction (46), said resistance temperature detector connected in series with said second lead (28) of said thermocouple and comprising:

(i) a wire (50),

(ii) a frame (18) having a pair of generally parallel legs (52, 54) with a space (56) therebetween, and

(iii) a winding of said wire about said pair of legs (52, 54) such that said wire in stretched longitudinally when said space (56) between said pair of legs is widened.

2. A calibrated probe, as recited in claim 1, wherein said first thermocouple lead (29) is composed of constantan and said second thermocouple lead (28) is composed of iron.

3. A calibrated temperature probe, as recited in claim 1 or 2, characterized by

(a) an iron tip (14) having situated thereon said first thermocouple at a first location (24) and with a second location (26) at a predetermined distance therefrom, said first lead (26) having first and second ends with said first end being connected to said first location (24) on said iron tip (14) and said second end terminating in said first output junction (46),

(b) a third lead (32) having first and second ends, with said first end thereof being connected to said second location (26) on said iron tip and said second end thereof terminating in a second output junction (48),

(c) said second lead (28) having first and second ends, with said first end thereof being connected to said iron tip (14),

(d) said resistance temperature detector (50) being in close proximity to said first and second output junctions (46, 48) and,

(e) heater means (34) responsive to the temperature measurements at said first and second locations for preventing heat flow in said iron tip (14) from said first location (24) toward said second location (26) by maintaining said second location at substantially the same temperature as the temperature at said first location.

4. A calibrated probe, as recited in claim 3, wherein said heater means further comprises:

(a) a heater (34) at least a portion of which is intermediate said first and second locations on said metal tip and,

(b) a differential amplifier (62) having first and second inputs (58, 60) responsive respectively to the temperatures measured by said first and third leads and an output (68, 70) for driving said heater when the temperature at said first location (24) on said metal tip (14) exceeds the temperature at said second location (26) on said metal tip.

5. A calibrated probe, as recited in claim 1, wherein said wire is composed of nickel/iron.

6. A calibrated probe, as claimed in claim 3, wherein said third lead (32) is composed of constantan.

**Patentansprüche**

1. Ein geeichter Sensor zum Messen der Temperatur eines Gegenstandes, mit dem der genannte Sensor in Kontakt gebracht ist, mit

(a) einem Thermoelement (31) zum Messen der Temperatur des genannten Gegenstandes, das sich in Kontakt mit dem genannten Gegenstand befindet und eine erste und zweite Leitung (29, 28) aufweist,

(b) einer elektronischen Schaltungsanordnung (62, 66) zum Verstärken und Anzeigen des Temperaturmeßwertes am genannten Thermoelement, welche genannte Schaltungsanordnung mit der genannten ersten Leitung (29) des genannten Thermoelementes verbunden ist, um dort eine erste Ausgangs-Verbindungsstelle (46) festzulegen, gekennzeichnet durch

(c) einen Widerstands-Temperaturdetektor (50) in nächster Nähe zur genannten Ausgangs-Verbindungsstelle (46), welcher genannte Widerstands-Temperaturdetektor in Reihe mit der genannten zweiten Leitung (28) des genannten Thermoelementes geschaltet ist und umfaßt:

(i) einen Draht (50),

(ii) einen Rahmen (18), der ein Paar allgemein paralleler Schenkel (52, 54) mit einem dazwischenliegenden Raum (56) aufweist, und

(iii) eine Wicklung des genannten Drahtes um das genannte Paar Schenkel (52, 54) herum derart, daß der genannte Draht in Längsrichtung gestreckt ist, wenn der genannte Raum (56) zwischen dem genannten Paar Schenkel vergrößert ist.

2. Ein geeichter Sensor nach Anspruch 1, in welchem die genannte erste Thermoelement-Leitung (29) aus Konstantan besteht und die genannte zweite Thermoelement-Leitung (28) aus Eisen besteht.

3. Ein geeichter Sensor nach Anspruch 1 oder 2, gekennzeichnet durch,

(a) eine Eisenspitze (14), an der an einer ersten Stelle (24) das genannte erste Thermoelement angeordnet ist und die eine zweite Stelle (26) in einer vorbestimmmten Entfernung davon aufweist, wobei die genannte erste Leitung (26) ein erstes und zweites Ende umfaßt, welches genannte erste Ende an der genannten ersten Stelle (24) an die genannte Eisenspitze (14) angeschlossen ist und das genannte zweite Ende in der genannten ersten Ausgangs-Verbindungsstelle endet,

(b) eine dritte Leitung (32) mit erstem und zweitem Ende, wobei dessen genanntes erste Ende an der genannten zweiten Stelle (26) an die genannte Eisenspitze angeschlossen ist und dessen genanntes zweite Ende in einer zweiten Ausgangs-Verbindungsstelle (48) endet,

(c) wobei die genannte zweite Leitung (28) ein erstes und zweites Ende aufweist und mit seinem genannten ersten Ende an die genannte Eisenspitze (14) angeschlossen ist,

(d) und wobei der genannte Widerstands-Temperaturdetektor (50) in nächster Nähe zur genannten ersten und zweiten Ausgangs-Verbindungsstelle (46, 48) angeordnet ist, und

(e) eine auf die Temperaturmessungen an den genannten ersten und zweiten Stellen ansprechende Heizeinrichtung (34) zum Verhindern einer Wärmeströmung in der genannten Eisenspitze (14) von der genannten ersten Stelle (24) in Richtung zur genannten zweiten Stelle (26) durch Halten der genannten zweiten Stelle auf im wesentlichen der gleichen Temperatur wie die Temperatur an der genannten ersten Stelle.

4. Ein geeichter Sensor nach Anspruch 3, in welchem die genannte Heizeinrichtung weiter aufweist:

(a) eine Heizung (34), die mit wenigstens einem Teil zwischen der genannten ersten und zweiten Stelle an der genannten Metallspitze angeordnet ist, und

(b) einen Differentialverstärker (62) mit erstem und zweitem Eingang (58, 60), die auf die durch die genannte erste bzw. dritte Leitung gemessenen Temperaturen ansprechen, und einem Ausgang (68, 70) zum Antreiben der genannten Heizung, wenn die Temperatur an der genannten ersten Stelle (24) an der genannten Metallspitze (14) die Temperatur an der genannten zweiten Stelle (26) an der genannten Metallspitze übersteigt.

5. Ein geeichter Sensor nach Anspruch 1, in welchem der genannte Draht aus Nickel/Eisen besteht.

6. Ein geeichter Sensor nach Anspruch 3, in welchem die genannte dritte Leitung (32) aus Konstantan besteht.

**Revendications**

1. Un sonde calibrée pour mesurer la température d'un objet avec lequel cette sonde est mise en contact, comportant:

a) un thermocouple (31), en contact avec ledit objet pour mesurer la température de cet objet, comportant un premier et un second fil (29, 28)

b) des circuits électroniques (62, 66) pour amplifier et afficher la lecture de température dudit thermocouple, ce circuit étant relié au premier fil (29) du thermocouple de manière à y définir une première jonction de sortie (46), caractérisée par:

c) un détecteur de température de résistance (50) situé au voisinage étroit de ladite jonction de sortie (46), ce détecteur de température de résistance étant monté en série avec ledit second fil (28) dudit thermocouple, et comportant:

(i) un filament (50),

(ii) un support (18) avec une paire de branches dans l'ensemble parallèles (52, 54), séparées par un intervalle (56) et

(iii) un enroulement dudit filament autour de cette paire de branches (52, 54), tel que ce filament soit étiré longitudinalement lorsque l'on élargit ledit intervalle (56) entre cette paire de branches.

2. Une sonde calibrée selon la revendication 1, dans laquelle le premier fil de thermocouple (29) est formé de constantan, et dans lequel le second fil de thermocouple (28) est formé de fer.

3. Une sonde de température calibrée selon l'une des revendications 1 ou 2, caractérisée par:

(a) un embout de fer (14) comportant sur lui ledit premier thermocouple en un premier point (24), et avec un second point (26) situé à une distance prédéterminée de ce premier point, ledit premier fil (26) ayant une première et une seconde extrémité, la première extrémité étant reliée au premier point (24) de l'embout de fer (14) et la seconde extrémité se terminant dans ladite première jonction de sortie (46),

(b) un troisième fil (32) ayant une première et une seconde extrémité, la première extrémité de celui-ci étant reliée au premier point (26) de l'embout de fer et la seconde extrémité de celui-ci se terminant dans une seconde jonction de sortie (48),

(c) ledit second fil (28) ayant une première et une seconde extrémité, la première extrémité de celui-ci étant reliée à l'embout de fer (14)

(d) ledit détecteur de température de résistance (50) étant au voisinage étroit de la première et de la seconde jonction de sortie (46, 48), et

(e) des moyens réchauffeurs (34), fonctionnant en réponse aux mesures de température prises au premier et au second point de manière à empêcher un flux thermique dans l'embout de fer (14) depuis le premier point (24) vers le second point (26) en maintenant ce second point pratiquement à la même température que la température du premier point.

4. Une sonde calibrée selon la revendication 3, dans laquelle lesdits moyens réchauffeurs comportent en outre:

(a) un réchauffeur (34) dont au moins une partie se trouve entre ledit premier et ledit second point de l'embout métallique, et

(b) un amplificateur différentiel (62) ayant une première et une seconde entrée (58, 60) fonctionnant respectivement en réponse aux températures mesurées par ledit premier et ledit troisième fil et une sortie (68, 70) permettant de piloter le réchauffeur lorsque la température au premier point (24) de l'embout métallique (14) dépasse la température au second point (26) de cet embout métallique.

5. Une sonde calibrée selon la revendication 1, dans laquelle ledit filament est formé de nickel/fer.

6. Une sonde calibrée selon la revendication 3, dans laquelle ledit troisième fil (32) est formé de constantan.

Fig.1

Fig.2

1

Fig. 4

Fig. 3

Fig. 5